Europäisches Patentamt

European Patent Office

Office européen des brevets

(19)

(11) **EP 1 354 248 B1**

(12) **EUROPÄISCHE PATENTSCHRIFT**

(45) Veröffentlichungstag und Bekanntmachung des Hinweises auf die Patenterteilung:
**21.06.2006 Patentblatt 2006/25**

(21) Anmeldenummer: **01990371.5**

(22) Anmeldetag: **21.12.2001**

(51) Int Cl.:
*G05B 17/02* (2006.01)

(86) Internationale Anmeldenummer:
**PCT/DE2001/004890**

(87) Internationale Veröffentlichungsnummer:
**WO 2002/057857 (25.07.2002 Gazette 2002/30)**

(54) **VERFAHREN ZUR SIMULATION MECHATRONISCHER SYSTEME**

METHOD FOR SIMULATING A MECHATRONIC SYSTEM

PROCEDE POUR LA SIMULATION DE SYSTEMES MECATRONIQUES

(84) Benannte Vertragsstaaten:
**DE FR GB**

(30) Priorität: **18.01.2001 DE 10102313**
          **02.08.2001 DE 10137909**

(43) Veröffentlichungstag der Anmeldung:
**22.10.2003 Patentblatt 2003/43**

(73) Patentinhaber: **SIEMENS AKTIENGESELLSCHAFT**
**80333 München (DE)**

(72) Erfinder:
  • **HAMM, Carsten**
    **91058 Erlangen (DE)**
  • **LOUIS, Michael**
    **54439 Fisch (DE)**
  • **PAPIERNIK, Wolfgang**
    **91077 Neunkrichen (DE)**

(56) Entgegenhaltungen:
**EP-A- 0 275 664**

  • **KAPUCU S ET AL: "TUTORIAL NOTE ON THE IDENTIFICATION OF LINEAR MECHANICAL SYSTEMS" MECHATRONICS, PERGAMON PRESS, OXFORD, GB, Bd. 3, Nr. 7, April 1997 (1997-04), Seiten 297-313, XP001076837 ISSN: 0957-4158**
  • **L.KOPHAPUT: "LINEARISIERUNG DER DIFFERENTIALGLEICHUNGEN DES EINMASSENSCHWINGERS FÜR BELIEBIGE, EINDEUTIGE KENNLINIEN MIT ANWENDUNGEN IM AUTOMOBILBAU " INGENIEUR ARCHIV, Bd. 55, Nr. 3, 1985, Seiten 186-201, XP008003166 WEST GERMANY**

## Beschreibung

Die Erfindung betrifft ein Verfahren zur Simulation mechatronischer Systeme.

Solche mechatronischen Systeme weisen wenigstens eine mechanische und elektrotechnische/elektronische Komponente auf, die sich im Hinblick auf Konstruktion, Aufbau und Funktion zu einem einheitlichen System zusammenfügen. Diesem Sachverhalt wird durch den Kunstbegriff "mechatronisch" Ausdruck verliehen.

Herkömmlicherweise erfolgt eine Modellierung einer Mechanik entweder durch Mehrmassenmodelle, also Modelle mit konzentrierten Federn und Massen, deren Differentialgleichungen quasi "von Hand" aufgestellt werden, oder vorzugsweise mit sogenannten FEM-Modellen. Solche FEM-Modelle bzw. Finite-Element-Modelle werden dabei aufgrund deren größerer Genauigkeit bevorzugt, sind jedoch sehr rechenaufwendig.

Bei letzteren lautet eine grundlegende Bewegungsgleichung wie folgt:

$$M \cdot \ddot{\vec{u}}(t) + D \cdot \dot{\vec{u}}(t) + C \cdot \vec{u}(t) = \vec{F}(t) \tag{1}$$

Hierbei sind

$M$      die Massenmatrix,

$D$      die Dämpfungsmatrix,

$C$      die Steifigkeitsmatrix,

$\vec{F}$      die Knotenpunktkräfte,

$\vec{u}$      der Knotenverschiebungsvektor und

$t$      die Zeit.

Diese Berechnungsvorschrift wird auf dem Fachmann bekannte Weise in ein solches Finite-Element-Modell integriert.

Zur Lösung der grundlegenden Bewegungsgleichung (1) existieren diverse Zeitintegrationsverfahren, die allesamt einen enormen Zeitaufwand erfordern, da die Integrationsschrittweite sehr klein gewählt werden muss, um einen Integrationsfehler in akzeptablen Grenzen im Hinblick auf die geforderte Genauigkeit zu halten.

Aufgabe der vorliegenden Erfindung ist es daher, ein Verfahren der eingangs genannten Art anzugeben, das bei gegenüber den vorangehend dargestellten, bekannten Methoden geringerem Rechenaufwand eine höhere Simulationsgenauigkeit liefert.

Diese Aufgabe wird durch ein Verfahren nach Anspruch 1 gelöst.

Nach einer ersten vorteilhaften Ausgestaltung des Verfahrens gemäß der vorliegenden Erfindung erfolgt die Transformation der grundlegenden Bewegungsgleichung auf lineare Differentialgleichungen erster Ordnung im Modalraum. Dadurch wird erreicht, dass vorgebbare Eigenmoden selektiert oder deselektiert werden können, bevor eine Zeitdiskretisierung erfolgt.

Nach einer weiteren vorteilhaften Ausgestaltung des Verfahrens gemäß der vorliegenden Erfindung werden zur Simulation zeitlicher Verzögerungen der Knotenpunktkräfte $\vec{F}$ entsprechende Differentialgleichungen hinzugefügt und bei der Bestimmung des Zeitverhaltens des Systems berücksichtigt. Dadurch lässt sich auf besonders effektive Weise der Erkenntnis Rechnung tragen, dass sich solche Kräfte in der Regel nur mit zeitlicher Verzögerung aufbauen.

Natürlich besteht auch die Möglichkeit, zusätzlich Kräfte im System ohne Zeitverzögerung einzuprägen, wenn die Realität es erfordert (z.B. Modellierung der Gravitation). Dies erfolgt vorzugsweise, indem zusätzliche nichtverzögerte Kräfte $\vec{F}_D$ im System durch Aufspalten des Kraftvektors $\vec{F}$ in einen Anteil zeitverzögerter Kräfte $\vec{F}_R$ und einen Anteil nicht zeitverzögerter Kräfte $\vec{F}_D$ bei der Bestimmung des Zeitverhaltens des Systems berücksichtigt werden.

Es hat sich als besonders vorteilhaft herausgestellt, wenn die Differentialgleichungen zur Simulation zeitlicher Verzögerungen der Knotenpunktkräfte $\vec{F}$ mit einem PT1-Regelglied als Stellglied beschrieben werden, wobei die Sollkraft die Stellgröße dieses Reglers darstellt.

Prinzipiell können natürlich auch Stellglieder mit beliebiger Übertragungsfunktion verwendet werden.

Nach einer weiterhin vorteilhaften Ausgestaltung des Verfahrens gemäß der vorliegenden Erfindung dienen zur Beschreibung des mechanischen Teils des mechatronischen Systems modale Koordinaten und deren zeitliche Ableitungen, woraus die grundlegende Bewegungsgleichung

$$\overline{M} \cdot \ddot{\vec{q}}(t) + \overline{D} \cdot \dot{\vec{q}}(t) + \overline{C} \cdot \vec{q}(t) = \vec{Q}(t)$$

resultiert, wobei

$\overline{M} = X' \cdot M \cdot X$     die modale Massenmatrix,

$\overline{D} = X' \cdot D \cdot X$     die modale Dämpfungsmatrix,

$\overline{C} = X' \cdot C \cdot X$     die modale Steifigkeitsmatrix,

$X$     die Matrix der Eigenvektoren des ungedämpften Systems,

$\vec{q}$     die generalisierten modalen Koordinaten

$\vec{u} = X \cdot \vec{q}$     die Knotenpunktverschiebungen

$\vec{Q} = X' \cdot \vec{F}$     die generalisierten modalen Kräfteangibt.

Weitere Vorteile und Einzelheiten der Erfindung ergeben sich anhand der folgenden Darstellung der mathematischen Zusammenhänge zur Berechnung und in Verbindung mit der Figur. Es zeigt in Prinzipdarstellung:

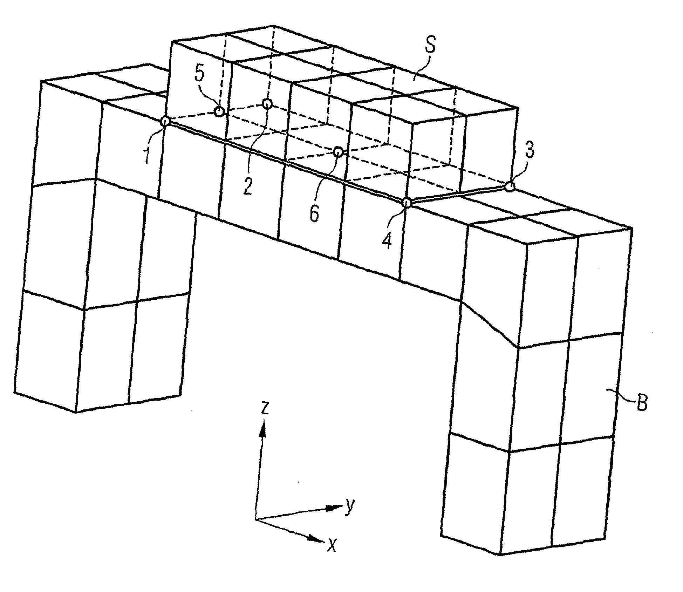

FIG 1     ein Finite-Element-Modell einer mechanischen Brücke mit einem verfahrbaren Schlitten.

Die eingangs beschriebene grundlegende Bewegungsgleichung (1) wird erfindungsgemäß zunächst auf gewöhnliche Standard-Zustandsgleichungen transformiert, insbesondere auf lineare Differentialgleichungen erster Ordnung, vorzugsweise im Modalraum. Diese werden anschließend zeitdiskretisiert, so dass zur Bestimmung des Zeitverhaltens des Systems anstelle der Differentialgleichungen nur noch algebraische Differenzengleichungen zu lösen sind, was mit den heutigen Rechnersystemen einfacher und effektiver möglich ist.

Durch die Transformation ist nämlich zur Bestimmung des Zeitverhaltens des simulierten Systems das Zeitraster, also die Berechnung der Differenzengleichungen, nur noch im Abtastraster des Regelungsprozessors zu aktualisieren. Dies ist der Fall, weil nur die Werte im Rechnertakt eines die Berechung ausführenden Computers von Bedeutung sind. Die Rechenschrittweite kann so von typisch 1...5 msec auf $100\,\mu\text{sec}$ reduziert werden, je nach geforderter Genauigkeit.

Die so erzielte erfindungsgemäße Lösung der algebraischen Gleichungen ist exakt, während die herkömmliche Lösung von Differentialgleichungen zur Simulation nur eine Näherung darstellen.

Die wesentlichen Vorteile dieser Vorgehensweise sind die höhere Simulationsgenauigkeit und die enorme Zeitersparnis, wodurch die Simulation für den Anwender erheblich an Praxisrelevanz gewinnt. Im Allgemeinen beträgt der Faktor der Zeitersparnis gegenüber den eingangs geschilderten bekannten Verfahren mehr als 1000.

Wesentlich für die Erfindung ist dabei der "Zugang" des im Folgenden dargestellten Berechnungsgangs:

Ausgehend von der grundlegenden Bewegungsgleichung (1) wird zunächst - aus Gründen der besseren Anschaulichkeit - folgendes definiert:

$$\vec{u} := \vec{x}_1 \quad \text{und} \quad \dot{\vec{x}}_1 := \vec{x}_2 \qquad\qquad (2)$$

Damit erhält man aus der grundlegenden Bewegungsgleichung (1) folgendes Berechnungsvorschrift:

$$M \cdot \dot{\vec{x}}_2 + D \cdot \vec{x}_2 + C \cdot \vec{x}_1 = \vec{F} \qquad\qquad (3)$$

Die beiden Gleichungen (2) und (3) können nun zusammengefasst werden:

$$\begin{bmatrix} \dot{\vec{x}}_1 \\ \dot{\vec{x}}_2 \end{bmatrix} = \begin{bmatrix} 0 & I \\ -M^{-1} \cdot C & -M^{-1} \cdot D \end{bmatrix} \cdot \begin{bmatrix} \vec{x}_1 \\ \vec{x}_2 \end{bmatrix} + \begin{bmatrix} 0 \\ M^{-1} \end{bmatrix} \cdot \vec{F} \qquad\qquad (4)$$

Da die Kraft in der Regel nur verzögert aufgebaut werden kann, wird dieses durch Hinzufügen entsprechender Differentialgleichungen berücksichtigt. Im einfachsten Fall lässt sich das Stellglied durch ein PT1-Glied beschreiben. Hierfür ergibt sich dann für die Kraft:

$$\dot{\vec{F}} = -\frac{1}{T_{ers,F}} \cdot \vec{F} + \frac{1}{T_{ers,F}} \cdot \vec{F}^w \quad , \tag{5}$$

wobei $T_{ers,F}$ die Zeitkonstante des PT1-Gliedes und $\vec{F}^w$ die Sollkraft (Stellgröße des Reglers) ist.

Die Berechnungsvorschrift (5) lässt sich nun mit der Berechnungsvorschrift (4) zusammenfassen. Definiert man noch $\vec{F} := \vec{x}_3$ , so folgt:

$$\underbrace{\begin{bmatrix} \dot{\vec{x}}_1 \\ \dot{\vec{x}}_2 \\ \dot{\vec{x}}_3 \end{bmatrix}}_{\dot{X}} = \underbrace{\begin{bmatrix} 0 & I & 0 \\ -M^{-1}\cdot C & -M^{-1}\cdot D & M^{-1} \\ 0 & 0 & -1/T_{ers,F} \end{bmatrix}}_{A} \underbrace{\begin{bmatrix} \vec{x}_1 \\ \vec{x}_2 \\ \vec{x}_3 \end{bmatrix}}_{\vec{x}} \cdot + \underbrace{\begin{bmatrix} 0 \\ 0 \\ 1/T_{ers,F} \end{bmatrix}}_{B} \cdot \underbrace{\vec{F}^w}_{\vec{u}} \tag{6}$$

Für den Fall, dass zusätzlich nichtverzögerte Kräfte $F_D$ im System wirken, werden diese durch Aufspalten des Kraftvektors in einen Anteil zeitverzögerter Kräfte $F_R$ und einen Anteil nicht zeitverzögerter Kräfte $F_D$ berücksichtigt. Die Berechnungsvorschrift (6) ergibt sich dann zu

$$\underbrace{\begin{bmatrix} \dot{\vec{x}}_1 \\ \dot{\vec{x}}_2 \\ \dot{\vec{x}}_3 \end{bmatrix}}_{\dot{X}} = \underbrace{\begin{bmatrix} 0 & I & 0 \\ -M^{-1}\cdot C & -M^{-1}\cdot D & M^{-1} \\ 0 & 0 & -1/T_{ers,F} \end{bmatrix}}_{A} \underbrace{\begin{bmatrix} \vec{x}_1 \\ \vec{x}_2 \\ \vec{x}_3 \end{bmatrix}}_{\vec{x}} \cdot + \underbrace{\begin{bmatrix} 0 & 0 \\ 0 & M^{-1} \\ 1/T_{ers,F} & 0 \end{bmatrix}}_{B} \cdot \underbrace{\begin{bmatrix} \vec{F}_R^w \\ \vec{F}_D \end{bmatrix}}_{\vec{u}} \tag{6a}.$$

Die Berechnungsvorschriften (6) oder (6a) stellen nunmehr jeweils eine Standard-Zustandsgleichung zur Beschreibung regelungstechnischer Vorgänge dar und lassen sich auf allgemein bekannte Weise auf die diskreten Zustandsgleichungen

$$\vec{x}_{(k+1)T} = A_d \cdot x_{kT} + B_d \cdot u_{kT} \tag{7}$$

transformieren, wobei die diskreten Systemmatrizen $A_d$ und $B_d$ durch

$$A_d = e^{A\cdot T} \quad , \quad B_d = \int_0^T e^{A\cdot v} \cdot B \, dv \tag{8}$$

gegeben sind.

Da sich der Stellwert u nur im Abtastraster ändern kann, beschreibt die vorstehende Berechnungsvorschrift (8) das Verhalten des Systems zu den Abtastzeitpunkten exakt.

Zur Beschreibung der Zustände des mechanischen Systems werden zweckmäßigerweise modale Koordinaten und deren zeitliche Ableitungen verwendet. Nimmt man eine Koordinatentransformation eines Finite-Element-Systems gegeben in der Form der grundlegenden Bewegungsgleichung (1) mit der Matrix der Eigenvektoren X und den generalisierten modalen Koordinaten $\vec{q}$ vor, so lässt sich das System in den sogenannten "Modalraum" transformieren.

Mit der Substitution $\vec{u} = X \cdot \vec{q}$ geht die grundlegende Bewegungsgleichung (1) dann über zu

$$\overline{M} \cdot \ddot{\vec{q}}(t) + \overline{D} \cdot \dot{\vec{q}}(t) + \overline{C} \cdot \vec{q}(t) = \vec{Q}(t) \qquad (9).$$

Hierbei sind im einzelnen

$\overline{M} = X' \cdot M \cdot X$     die modale Massenmatrix,

$\overline{D} = X' \cdot D \cdot X$     die modale Dämpfungsmatrix,

$\overline{C} = X' \cdot C \cdot X$     die modale Steifigkeitsmatrix,

$X$     die Matrix der Eigenvektoren des ungedämpften Systems,

$\vec{q}$     die generalisierten modalen Koordinaten

$\vec{u} = X \cdot \vec{q}$     die Knotenpunktverschiebungen

$\vec{Q} = X' \cdot \vec{F}$     die generalisierten modalen Kräfte.

Hierdurch wird sichergestellt, dass die Inverse $\overline{M}^{-1}$, die für Berechnung von Gleichung (6) benötigt wird, stets existiert, da die modale Massenmatrix $\overline{M}$ immer positiv definit ist.

Die Zustandsbeschreibung im Modalraum bietet ferner den Vorteil, dass bestimmte, vorgebbare Eigenmoden (de) selektiert werden können, bevor die Zeitdiskretisierung erfolgt.

Die Darstellung gemäß FIG 1 zeigt ein Finite-Element-Modell einer einfachen mechanischen Brücke B, auf der ein Schlitten S in x-Richtung x verfahren werden kann. Ein skizziertes Koordinatensystem zeigt die räumliche Ausrichtung in x-Richtung x, y-Richtung y und z-Richtung z. Des weiteren sind beispielhaft Anbindungsknoten 1 bis 4, ein Messknoten 5 und ein Krafteinleitungsknoten 6 gezeigt, die zur Simulation dienen.

Die Steifigkeit an den Anbindungsknoten ist demnach in x-Richtung x gleich 0, während sie in y- und z-Richtung y, z durch die Steifigkeit der Führungen vorgegeben ist. Zur Abbildung des Strukturverhaltens werden Volumenelemente verwendet.

Modelliert man dieses Finite-Element-Modell mit einem FEM-Programm, so können bedingt durch die Anzahl der Knoten bei diesem Modell ca. 200 Eigenfrequenzen auftreten, wovon allerdings nur die unteren 20 für das Systemverhalten wesentlich sind. Deshalb werden auch nur diese Eigenfrequenzen selektiert und die entsprechenden Standard-Zustandsgleichungen in Form der Systemmatrizen herausgeschrieben.

Man erhält damit Systemmatrizen der Ordnung 43:

- 20 konjugiert komplexe Eigenwerte ergibt die Ordnung 40,
- 1 Starrkörpermode mit doppeltem Pol im Ursprung, weil sich der Schlitten in x-Richtung frei bewegen kann,
- 1 reeller negativer Eigenwert, bedingt durch die Modellierung des Stromregelkreises.

⇒ in Summe ergibt sich für die Berechnungsvorschrift (6) eine Systemordnung von 43.

Entsprechend ist die Systemordnung nach der Diskretisierung gemäß den Berechnungsvorschriften (7) und (8) ebenfalls von der Ordnung 43.

Die Simulationsdauer einer Sprungantwort nach dem erfindungsgemäßen Verfahren beträgt beispielsweise mit dem Programm 'Matlab/Simulink/Realtime-Workshop' 130msec. Die Simulation desselben Vorgangs auf herkömmliche Weise dauert bei beispielhafter Verwendung des Softwareinstrumentes PERMAS' 11 min., d.h. die Simulationszeit kann durch Anwendung der vorliegenden Patenanmeldung ca. um den Faktor 5000 verkürzt werden.

**Patentansprüche**

1. Verfahren zur Simulation eines mechatronischen Systems, wobei das mechatronische System mindestens eine mechanische und elektrotechnische/elektronische Komponente aufweist, ausgehend von einer grundlegenden Bewegungsgleichung

$$M \cdot \ddot{\vec{u}}(t) + D \cdot \dot{\vec{u}}(t) + C \cdot \vec{u}(t) = \vec{F}(t)$$

zur Modellierung des Systems, wobei

$M$ die Massenmatrix,
$D$ die Dämpfungsmatrix,
$C$ die Steifigkeitsmatrix,

$\vec{F}$ die Knotenpunktkräfte,

$\vec{u}$ der Knotenverschiebungsvektor und
$t$ die Zeit

angibt, **dadurch gekennzeichnet** durch die aufeinanderfolgenden Verfahrensschritten:

- Transformation der grundlegenden Bewegungsgleichung auf lineare Differentialgleichungen erster Ordnung,
- weitere Transformation der linearen Differentialgleichungen auf zeitdiskrete Zustandsgleichungen,
- Bestimmung des Zeitverhaltens des Systems durch Aktualisierung der resultierenden algebraischen Differenzengleichungen im Abtastraster eines zugeordneten Regelungsprozessors.

2. Verfahren zur Simulation eines mechatronischen Systems nach Anspruch 1, **dadurch gekennzeichnet, dass** die Transformation der grundlegenden Bewegungsgleichung auf lineare Differentialgleichungen erster Ordnung im Modalraum erfolgt.

3. Verfahren zur Simulation eines mechatronischen Systems nach Anspruch 1 oder 2, **dadurch gekennzeichnet, dass** zur Simulation zeitlicher Verzögerungen der Knotenpunktkräfte $(\vec{F})$ entsprechende Differentialgleichungen hinzugefügt werden und bei der Bestimmung des Zeitverhaltens des Systems berücksichtigt werden.

4. Verfahren zur Simulation eines mechatronischen Systems nach Anspruch 3, **dadurch gekennzeichnet, dass** zusätzliche nichtverzögerte Kräfte $(\vec{F}_D)$ im System durch Aufspalten des Kraftvektors $(\vec{F})$ in einen Anteil zeitverzögerter Kräfte $(\vec{F}_R)$ und einen Anteil nicht zeitverzögerter Kräfte $(\vec{F}_D)$ bei der Bestimmung des Zeitverhaltens des Systems berücksichtigt werden.

5. Verfahren zur Simulation eines mechatronischen Systems nach Anspruch 3 oder 4, **dadurch gekennzeichnet, dass** die Differentialgleichungen zur Simulation zeitlicher Verzögerungen der Knotenpunktkräfte $(\vec{F})$ mit einem PT1-Regelglied als Stellglied beschrieben werden, wobei die Sollkraft $(\vec{F}^W)$ die Stellgröße dieses Reglers darstellt.

6. Verfahren zur Simulation eines mechatronischen Systems nach einem der vorangehenden Ansprüche 2 bis 5, **dadurch gekennzeichnet, dass** zur Beschreibung des mechanischen Teils des mechatronischen Systems modale Koordinaten und deren zeitliche Ableitungen dienen, woraus die grundlegende Bewegungsgleichung

$$\overline{M} \cdot \ddot{\vec{q}}(t) + \overline{D} \cdot \dot{\vec{q}}(t) + \overline{C} \cdot \vec{q}(t) = \vec{Q}(t)$$

resultiert, wobei

$\overline{M} = X' \cdot M \cdot X$ die modale Massenmatrix,
$\overline{D} = X' \cdot D \cdot X$ die modale Dämpfungsmatrix,
$\overline{C} = X' \cdot C \cdot X$ die modale Steifigkeitsmatrix,
$X$ die Matrix der Eigenvektoren des ungedämpften Systems,

$\vec{q}$ die generalisierten modalen Koordinaten

$\vec{u} = X \cdot \vec{q}$ die Knotenpunktverschiebungen

$\vec{Q} = X' \cdot \vec{F}$ die generalisierten modalen Kräfte

angibt.

**Claims**

1. Method for simulating a mechatronic system, said mechatronic system having at least one mechanical and electrical/electronic component, starting from the basis of a fundamental motion equation

$$M \cdot \ddot{\vec{u}}(t) + D \cdot \dot{\vec{u}}(t) + C \cdot \vec{u}(t) = \vec{F}(t)$$

for modelling the system, where

$M$ is the mass matrix,
$D$ is the damping matrix,
$C$ is the stiffness matrix,

$\vec{F}$ are the nodal forces,

$\vec{u}$ is the nodal displacement vector, and
$t$ is the time.

**characterised by** the successive method steps:

- transformation of the fundamental equation of motion into first-order linear differential equations,
- further transformation of the linear differential equations into time-discrete state equations,
- determination of the time response of the system through updating of the resultant algebraic difference equations in the sampling raster of an associated control processor.

2. Method for simulating a mechatronic system according to claim 1, **characterised in that** the transformation of the fundamental equation of motion into first-order linear differential equations is performed in the modal space.

3. Method for simulating a mechatronic system according to claim 1 or 2, **characterised in that** appropriate differential equations are added for simulating time delays of the nodal forces $(\vec{F})$ and are taken into account when determining the time response of the system.

4. Method for simulating a mechatronic system according to claim 3, **characterised in that** additional forces $(\vec{F}_D)$ without a time delay in the system are taken into account by splitting the force vector $(\vec{F})$ into a portion of forces $(\vec{F}_R)$ with a time delay and a portion of forces $(\vec{F}_D)$ without a time delay when determining the time response of the system.

5. Method for simulating a mechatronic system according to claim 3 or 4, **characterised in that** the differential equations for simulating time delays of the nodal forces $(\vec{F})$ are described by means of a PT1 control element as a final control element, with the desired force $(\vec{F}^W)$ representing the manipulated variable of said controller.

6. Method for simulating a mechatronic system according to one of the preceding claims 2 to 5, **characterised in that** modal coordinates and their time derivatives are used to describe the mechanical part of the mechatronic system, resulting in the fundamental motion equation

$$\overline{M} \cdot \ddot{\vec{q}}(t) + \overline{D} \cdot \dot{\vec{q}}(t) + \overline{C} \cdot \vec{q}(t) = \vec{Q}(t)$$

where

$\overline{M} = X'\cdot M \cdot X$ is the modal mass matrix,
$\overline{D} = X'\cdot D \cdot X$ is the modal damping matrix,
$\overline{C} = X'\cdot C \cdot X$ is the modal stiffness matrix,
$X$ is the matrix of the eigenvectors of the undamped system,

$\vec{q}$ are the generalised modal coordinates,

$\vec{u} = X \cdot \vec{q}$ are the nodal shifts, and

$\vec{Q} = X'\cdot \vec{F}$ are the generalised modal forces.

**Revendications**

1. Procédé de simulation d'un système mécatronique, le système mécatronique comportant au moins un composant mécanique et électrotechnique/électronique, à partir d'une équation de mouvement de base.

$$M \cdot \ddot{\vec{u}}(t) + D \cdot \dot{\vec{u}}(t) + C \cdot \vec{u}(t) = F(t)$$

pour modéliser le système, où
$M$ désigne la matrice d'inertie,
$D$ désigne la matrice d'amortissement
$C$ désigne la matrice de raideur,

$\vec{F}$ désigne les forces aux points nodaux,

$\vec{u}$ désigne et le vecteur de translation nodale et

$t$ désigne le temps
**caractérisé par** les étapes opératoires suivantes :

- transformation de l'équation de mouvement de base en des équations différentielles linéaires de premier ordre,
- autre transformation des équations différentielles linéaires en des équations d'état à valeurs discrètes dans le temps,
- détermination du comportement dans le temps du système par actualisation des équations différentielles algébriques résultantes dans la trame d'analyse d'un processeur de régulation associé.

2. Procédé de simulation d'un système mécatronique selon la revendication 1, **caractérisé en ce que** la transformation de l'équation de mouvement de base en équations différentielles linéaires de premier ordre est effectuée dans l'espace modal.

3. Procédé de simulation d'un système mécatronique selon la revendication 1 ou 2, **caractérisé en ce que**, pour simuler des retards des forces aux points nodaux, des équations différentielles correspondantes sont ajoutées et prises en compte dans la détermination du comportement dans le temps du système.

4. Procédé de simulation d'un système mécatronique selon la revendication 3, **caractérisé en ce que**, dans le système, des forces non retardées supplémentaires ($\vec{F}_D$) sont prises en compte dans la détermination du comportement dans le temps du système en scindant le vecteur force ( $\vec{F}$ ) en une partie forces retardées ( $\vec{F}_R$ ) et une partie forces non retardées ( $\vec{F}_D$ ) .

5. Procédé de simulation d'un système mécatronique selon la revendication 3 ou 4, **caractérisé en ce que** les équations différentielles destinées à la simulation de retards des forces aux points nodaux ( $\vec{F}$ ) sont décrites avec un élément de régulation PT1 comme actionneur, la force de consigne ( $\vec{F}^W$ ) représentant la grandeur de commande de ce régulateur.

6. Procédé de simulation d'un système mécatronique selon l'une des revendications précédentes 2 à 5, **caractérisé en ce que** des coordonnées modales et leurs dérivations par rapport au temps servent à décrire la partie mécanique du système mécatronique, lesquelles coordonnées et dérivations permettant d'obtenir l'équation de mouvement de base

$$\overline{M} \cdot \ddot{\vec{q}}(t) + \overline{D} \cdot \dot{\vec{q}}(t) + \overline{C} \cdot \vec{q}(t) = \overline{Q}(t)$$

où
$\overline{M} = X' \cdot M \cdot X$ désigne la matrice d'inertie modale
$\overline{D} = X' \cdot D \cdot X$ désigne la matrice d'amortissement modale
$\overline{C} = X' \cdot C \cdot X$ désigne la matrice de raideur modale
X désigne la matrice des vecteurs propres du système non amorti,

$\vec{q}$ désigne les coordonnées modales généralisées,

$\vec{u} = X \cdot \vec{q}$ désigne les translations de point modal

$\vec{Q} = X' \cdot \vec{F}$ désigne les forces modales généralisées.